**Europäisches Patentamt**

**European Patent Office**

**Office européen des brevets**

(11) Veröffentlichungsnummer: **0 185 972**
**B1**

## EUROPÄISCHE PATENTSCHRIFT

(45) Veröffentlichungstag der Patentschrift:
**31.05.89**

(21) Anmeldenummer: **85115258.7**

(22) Anmeldetag: **02.12.85**

(51) Int. Cl.⁴: **H 04 M 1/72,** H 01 R 13/20

(54) **Batterieladekontakteinrichtung.**

(30) Priorität: **05.12.84 AT 3858/84**

(43) Veröffentlichungstag der Anmeldung:
**02.07.86 Patentblatt 86/27**

(45) Bekanntmachung des Hinweises auf die Patenterteilung:
**31.05.89 Patentblatt 89/22**

(84) Benannte Vertragsstaaten:
**AT CH DE LI**

(56) Entgegenhaltungen:
**EP-A-0 149 096**
**US-A-4 332 981**

**PATENT ABSTRACTS OF JAPAN, Band 9, Nr. 4 (E-288) 1727 , 10. Januar 1985; & JP - A - 59 153 340**

(73) Patentinhaber: **Siemens Aktiengesellschaft Berlin und München, Wittelsbacherplatz 2, D-8000 München 2 (DE)**

(72) Erfinder: **Borovka, Paul, Anton- Dreher- Gasse 18, A-2325 Himberg (AT)**
Erfinder: **Epp, Bernhard, A-2223 Martinsdorf 14 (AT)**

## Beschreibung

Die Erfindung betrifft eine Batterieladekontakteinrichtung für schnurlose Telefonapparate für die Ladung von Batterien im Mobilteil des Telefonapparates vom Standteil des Telefonapparates aus.

Zweck der Einrichtung ist es bei schnurlosen Telefonapparaten über Netzgleichrichtereinrichtungen im Standteil die Batterien im Mobilteil bei betriebslosem Zustand nachzuladen. In einer wannenförmigen Ausnehmung im Deckelteil des Standteiles sind ein bzw. übereinander geschichtet zwei Mobilteile eingelegt. Im Betriebszustand sind Mobilteil und Standteil über Funk verbunden.

Herkömmliche Lösungen verwenden für die Kontaktgabe zwischen Standteil und Mobilteil Kontakthülsen mit Spiralfeder und Kontaktbolzen, wobei die Verbindung zum Netzteil über Drahtanschlüsse erfolgt. Nachteilig sind hier die Drahtanschlüsse beim Abheben des Deckelteiles. Andere Lösungen wie z. B. in US-A-4 332 981 sehen Kontaktfedern vor, die direkt mit Kontaktelementen im Mobilteil im Eingriff sind. Nachteilig ist hier die oftmalige Federbeanspruchung und die mögliche Deformierung der Kontaktfedern.

Der Erfindung liegt die Aufgabe zugrunde unter Vermeidung der Nachteile eine stabile Batterieladekontakteinrichtung für schnurlose Telefonapparate benützerfreundlich zu gestalten.

Diese Aufgabe wird erfindungsgemäß dadurch gelöst, daß auf einer im Unterteil des Standteiles des Telefonapparates in bekannter Weise verankerten Leiterplatte zwei Kontaktträger, die für die Halterung von je mindestens einer mit der Leiterplatte über Lötstifte verlöteten Kontaktfeder sowie einer im Kontaktträger in zwei Nuten senkrecht zum federnden Kontaktfederende und mit diesem in federndem Eingriff beweglich gelagerten Kontaktrolle dienen, aufgesetzt sind, daß die Kontaktträger mit den Kontaktrollen durch den Deckelteil des Standteiles durchsteckbar sind und in eine Wanne im Deckelteil des Standteiles eingreifen, wobei die Wanne für die Aufnahme des Mobilteiles des Telefonapparates dient und im Mobilteil mit den Kontaktrollen korrespondierend angeordnete Kontaktelemente vorgesehen sind. Vorteilhaft ist hier die Vermeidung der Drahtanschlüsse, die benützerfreundliche selbstreinigende Kontaktgabe, die günstigen Toleranzprobleme gegenüber einem Verklemmen von direkt eingreifenden Kontaktfedern. Von besonderem Vorteil ist die stabile Ausführung insbesondere durch die festen Leitungswege im Hinblick auf den vorgesehenen Hochfrequenzbereich von ca. 900 MHz, wo nicht definierte Drahtlagen Störungsursachen bilden.

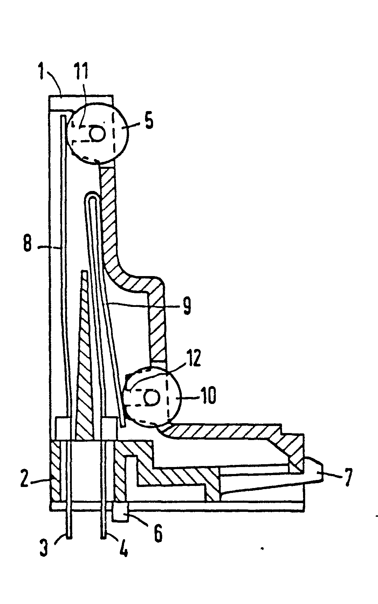

Ein Ausführungsbeispiel der Erfindung ist in der Zeichnung dargestellt und wird im folgenden näher erläutert. Es zeigt die

Fig. einen Kontaktträger der erfindungsgemäßen Batterieladekontakteinrichtung.

Anhand der Fig. wird die Batterieladekontakteinrichtung beschrieben. Auf eine im Unterteil des Standteiles des Telefonapparates befestigten Leiterplatte sind zwei Kontaktträger aufgesetzt, wobei für die toleranzgenaue Lage auf der Leiterplatte zwei Zapfen 6 und für die Verbindung mit entsprechenden Leiterbahnen auf der Leiterplatte zwei Lötstifte 3, 4 dienen. In vorteilhafter Weise besteht der Kontaktträger aus einem Kontaktträgerunterteil 2 und einem darauf aufschiebbaren Kontaktträgeroberteil 1, der mittels eines einrastbaren Hakens 7 mit dem Kontaktträgerunterteil 2 zu verriegeln ist. In den Kontaktträgerunterteil 2 sind zwei Kontaktfedern 8, 9 eingegossen deren eine Enden als Lötstifte 3, 4 ausgebildet sind. Im Kontaktträgeroberteil 1 sind mit ihrer Rollenachse in Nuten 11, 12 verschiebbar gelagert und durch einen Schlitz im Kontaktträgeroberteil 1 durchgesteckt zwei Kontaktrollen 5, 10 vorgesehen. Bei zusammengestecktem Kontaktträgeroberteil 1 und Kontaktträgerunterteil 2 drücken die Kontaktfedern 8, 9 mit ihrem federnden Ende die Kontaktrollen 5, 10 bis zum Ende der Nuten 11, 12. Zur Verlängerung des Federweges ist die Kontaktfeder 9 durch die Lage der Kontaktrolle 10 bedingt U-förmig gebogen.

Im Deckelteil des Standteiles des Telefonapparates sind Durchstecköffnungen für die Kontaktträger vorgesehen. Die Kontaktrollen 5, 10 greifen in eine wannenförmige Vertiefung des Deckelteiles ein, in die die prismenähnlich ausgebildeten Mobilteile des Telefonapparates einlegbar sind, wobei gegenüberliegende Kontaktelemente im Mobilteil korrespondierend mit den Kontaktrollen 5 bzw. 10 in federnden Eingriff gelangen. Die wannenförmige Vertiefung im Deckelteil ist so gestaltet, daß zwei Mobilteile übereinander in den Deckelteil einlegbar sind. In einfacher vorteilhafter Weise ist im betriebslosen Zustand des Telefonapparates eine Batterieladung möglich, wobei die Rollenkontakte selbstreinigend sind. Da es sich bei den schnurlosen Telefonapparaten um Hochfrequenzgeräte mit eingebauter Antenne handelt, ist es wesentlich, möglichst starre und kurze Leiterverbindungen zu schaffen, was mit der erfindungsgemäßen Lösung zu bewerkstelligen ist.

## Patentanspruch

1. Batterieladekontakteinrichtung für schnurlose Telefonapparate für die Ladung von Batterien im Mobilteil des Telefonapparates vom Standteil des Telefonapparates aus, dadurch gekennzeichnet, daß auf einer im Unterteil des Standteiles des Telefonapparates in bekannter Weise verankerten Leiterplatte zwei Kontaktträger (1, 2), die für die Halterung von je mindestens einer mit der Leiterplatte über Lötstifte (3, 4) verlöteten Kontaktfeder (8, 9) sowie einer im Kontaktträger (1, 2) in zwei Nuten (11, 12) senkrecht zum federnden Kontaktfederende und mit diesem in federndem Eingriff beweglich gelagerten Kontaktrolle (5, 10) dienen, aufgesetzt sind, daß die Kontaktträger (1, 2) mit den Kontaktrollen (5, 10) durch den Deckelteil des Standteiles durchsteckbar sind und in eine Wanne im Deckelteil des Standteiles eingreifen, wobei die Wanne für die Aufnahme des Mobilteiles des Telefonapparates dient und im Mobilteil mit den Kontaktrollen (5, 10) korrespondierend angeordnete Kontaktelemente vorgesehen sind.

## Claim

1. Contact device for battery charger for cordless telephone sets for charging batteries in the mobile part of the telephone set from the stationary part of the telephone set, characterized in that there are mounted on a printed circuit board anchored in a known fashion in the lower part of the stationary part of the telephone set two contact carriers (1, 2), which serve to hold respectively at least one contact spring (8, 9) soldered to the printed circuit board via soldering pins (3, 4), as well as to hold a contact roller (5, 10), which is supported movably in the contact carrier (1, 2) in two slots (11, 12) perpendicular to the resilient contact spring end and in resilient engagement with the latter, and in that the contact carriers (1, 2) may be inserted with the contact rollers (5, 10) through the cover part of the stationary part and engage in a well in the cover part of the stationary part, the well serving to accommodate the mobile part of the telephone set, and contact elements arranged to correspond with the contact rollers (5, 10) being provided in the mobile part.

## Revendication

1. Dispositif de contact de charge de batteries pour des appareils téléphoniques sans cordon, pour charger des batteries montées dans la partie mobile de l'appareil téléphonique à partir de la base fixe de cet appareil, caractérisé par le fait que sur une plaquette à circuits imprimés ancrée de façon connue dans la partie inférieure de la base fixe de l'appareil téléphonique se trouvent disposés deux porte-contacts (1, 2), qui servent à maintenir respectivement au moins un ressort de contact (8, 9) fixé par brasage à la plaquette à circuits imprimés par l'intermédiaire de pattes de soudure (3, 4), ainsi qu'un galet de contact (5, 10) monté dans le porte-contact (1, 2) de manière à être mobile dans deux rainures (11, 12) perpendiculairement à l'extrémité élastique du ressort de contact, en s'appliquant élastiquement contre cette extrémité, que les porte-contacts (1, 2) munis des galets de contact (5, 6) peuvent être insérés à travers l'élément formant capot de la base fixe et s'engagent dans une cuvette ménagée dans cet élément formant capot, la cuvette servant à recevoir la partie mobile de l'appareil téléphonique, tandis qu'il est prévu, dans la partie mobile, des éléments de contact disposés de manière à correspondre aux galets de contact (5, 10).